# EUROPÄISCHE PATENTSCHRIFT

(11) **EP 3 085 579 B1**
(45) Veröffentlichungstag und Bekanntmachung des Hinweises auf die Patenterteilung: **14.11.2018**
(21) Anmeldenummer: 16160864.1
(22) Anmeldetag: 17.03.2016
(51) Int. Cl.: B60N 2/50, B60N 2/16, B60N 2/02, G01D 5/14

(54) **SCHWINGMECHANISMUS MIT WINKELSENSOR**
OSCILLATING MECHANISM WITH AN ANGLE SENSOR
MECANISME BASCULANT A CAPTEUR ANGULAIRE

(30) Priorität: 24.04.2015 DE 102015106360
(43) Veröffentlichungstag der Anmeldung: 26.10.2016
(73) Patentinhaber: GRAMMER AG, 92224 Amberg (DE)
(72) Erfinder: Pelka, Joachim, 92224 Amberg (DE); Haller, Erwin, 92262 Birgland (DE)
(74) Vertreter: Hannke, Christian

(56) Entgegenhaltungen:
- EP-A2- 1 533 176
- DE-A1-102010 026 015
- DE-C1- 4 335 199
- FR-A1- 3 007 340
- US-A- 5 169 112

## Beschreibung

Die Erfindung betrifft eine Messeinrichtung für einen Fahrzeugsitz mit einem Fahrzeugsitzunterteil und einem gegenüber dem Fahrzeugsitzunterteil bewegbaren Fahrzeugsitzoberteil, wobei zwischen dem Fahrzeugsitzoberteil und dem Fahrzeugsitzunterteil ein Scherengestell mit mindestens einem ersten Scherenteil und mindestens einem zweiten Schwerenteil angeordnet ist, wobei das erste und das zweite Scherenteil mittels einer Drehachse miteinander verbunden sind und das erste Scherenteil mit einem ersten Endbereich mittels einer Schwenkachse an dem Fahrzeugsitzunterteil schwenkbar befestigt ist.

Es sind aus dem Stand der Technik Messeinrichtungen zur Messung von Auslenkungen des Fahrzeugsitzoberteils gegenüber dem Fahrzeugsitzunterteil bekannt, die einen Gurtaufrollmechanismus aufweisen. Dieser Gurtaufrollmechanismus ist einerseits mit dem Fahrzeugsitzoberteil verbunden, wobei ein Ende des Gurtes mit dem Fahrzeugsitzunterteil verbunden ist. Ein Teil des Gurtes ist daher aus dem Gurtaufrollmechanismus herausgezogen und ist zwischen dem Fahrzeugsitzoberteil und dem Fahrzeugsitzunterteil angeordnet. Bei einer Auslenkung des Fahrzeugsitzoberteils gegenüber dem Fahrzeugsitzunterteil wird, je nach Richtung der erfahrenen Auslenkung, der Gurt weiter aus dem Gurtaufrollmechanismus herausgezogen oder weiter in den Gurtaufrollmechanismus hineingezogen. Abhängig von der Durchmesseränderung des aufgerollten Gurtes innerhalb des Gurtaufrollmechanismus kann die Auslenkung des Fahrzeugsitzoberteils bestimmt werden.

Diese Art der Messung ist jedoch recht ungenau, da der Durchmesser des aufgerollten Gurtes nie exakt bestimmt werden kann aufgrund der dem Gurt innewohnenden Elastizität des Materials, aus dem der Gurt besteht. Außerdem ist bei dem aufgerollten Gurt kein konstanter Durchmesser möglich, wodurch weiter das Messergebnis verfälscht werden kann. Darüber hinaus handelt es sich bei dieser Methode um eine indirekte Messung, was weitere Fehler des Messergebnisses zur Folge haben kann.
DE 43 35 199 C1 beschreibt den Einsatz eines Winkelmessers, der an der Drehachse des Scherengestells angeordnet ist und mittels der Bewegung der Scherenarme betätigt wird.
Es ist daher Aufgabe der vorliegenden Erfindung, eine kostengünstige und einfache Messeinrichtung bereitzustellen, die die oben genannten Nachteile des Standes der Technik nicht mehr aufweist.

Die Aufgabe wird gelöst durch eine Messeinrichtung mit den Merkmalen des Anspruchs 1. Das Fahrzeugsitzunterteil ist vorzugsweise starr mit der Karosserie des Fahrzeuges, in dem der Fahrzeugsitz angeordnet ist, verbunden. Das heißt, das Fahrzeugsitzunterteil bleibt im Wesentlichen ortsfest in Bezug auf das Fahrzeug angeordnet.
Das Fahrzeugsitzoberteil bewegt sich erfindungsgemäß gegenüber dem Fahrzeugsitzunterteil, insbesondere relativ zu dem Fahrzeugsitzunterteil, wenn dieses ortsfest angeordnet ist.
Vorzugsweise umfasst dabei der Fahrzeugsitz eine zwischen dem Fahrzeugsitzoberteil und dem Fahrzeugsitzunterteil angeordnete Feder- und/oder eine Dämpfereinrichtung. Vorteilhaft umfasst die Federeinrichtung eine Fluidfeder, wobei besonders bevorzugt das Fluid Luft ist.

Natürlich sind sowohl für die Federeinrichtung als auch die Dämpfereinrichtung verschiedene Ausgestaltungsweisen denkbar, wie sie aus dem Stand der Technik wohlbekannt sind.

Umfasst die Federeinrichtung mindestens eine Fluidfeder, vorteilhafterweise eine Luftfeder, so ist es möglich, dass die Messeinrichtung innerhalb dieser Fluidfeder anordenbar ist, wodurch der benötigte Bauraum verringert werden kann. Zusätzlich wird die Winkelsensoreinheit vor Beschädigungen und Verschmutzung besser geschützt, was eine längere Lebensdauer und Funktionstüchtigkeit zur Folge hat.

Das obig beschriebene Scherengestell umfasst erfindungsgemäß mindestens ein erstes und mindestens ein zweites Scherenteil, die auch als Scherenarme bezeichnet werden können. Die Ausgestaltung des Scherengestells kann dabei verschieden sein, erfindungsgemäß ist das erste Scherenteil mit seinem ersten Endbereich mittels einer Schwenkachse an dem Fahrzeugsitzunterteil schwenkbar befestigt, was somit also einem Festlager entspricht.

Vorzugsweise umfasst das Scherengestell eine erste, aus einem ersten inneren und einem zweiten äußeren Scherenteil bestehende Schere und ein aus einer weiteren ersten inneren und einer weiteren zweiten äußeren Scherenteil bestehenden zweiten Schere, wobei vorteilhaft die erste und die zweite Schere über zumindest eine Querverbindung miteinander verbunden sind.

Vorteilhaft umfasst das erste Scherenteil in einem zweiten Endbereich ein Loslager. Das zweite Scherenteil ist vorteilhaft wie das erste Scherenteil aufgebaut, wobei das Festlager des zweiten Scherenteils am Fahrzeugsitzoberteil angeordnet ist.

Gemäß einer bevorzugten Ausführungsform ist der erste Abschnitt des ersten Scherenteils im Wesentlichen zwischen der Schwenkachse und der Drehachse angeordnet. Dadurch, dass die Winkelsensoreinheit in diesem ersten Abschnitt mit dem ersten Scherenteil verbunden ist, kann durch die Winkelsensoreinheit eine direkte Schwingungsermittlung des Scherengestells, insbesondere des ersten Scherenteils, gewährleistet werden. Unter einer direkten Schwingungsermittlung ist hierbei insbesondere zu verstehen, dass der Sensor durch Höhenveränderung des Fahrzeugsitzoberteils, was gleichbedeutend ist mit einer Verschwenkung des ersten Scherenteils, direkt angesprochen wird, wodurch ein genaueres Messergebnis des jeweils zu messenden Parameters erhalten werden kann.

Erfindungsgemäß ist die Winkelsensoreinheit mittels einer beweglichen Hebelvorrichtung mit dem Fahrzeugsitzunterteil beweglich verbunden, wobei die Winkelsensoreinheit mittels der Hebelvorrichtung betätigbar ist. Es ist daher besonders vorteilhaft, wenn die Winkelsensoreinheit einen Drehwinkelsensor umfasst, der eine Drehwinkeländerung erfassen kann. Bei einer Auslenkung des Fahrzeugsitzoberteils gegenüber dem Fahrzeugsitzunterteil, also eine Höhenänderung des Fahrzeugsitzes, wird eine Drehwinkeländerung mittels der Hebelvorrichtung hervorgerufen.
Da die Winkelsensoreinheit an dem ersten Scherenteil befestigt ist, bewegt sich bei einer Verschwenkung des ersten Scherenteils, etwa durch Auslenkung des Fahrzeugsitzoberteils gegenüber dem Fahrzeugsitzunterteil, die Winkelsensoreinheit auf einer Kurvenbahn. Bewegt sich also die Winkelsensoreinheit auf einer Kurvenbahn, so muss die Hebelvorrichtung derart ausgebildet sein, dass sie die entsprechenden Freiheitsgrade für die Bewegung einschließt. Ist beispielsweise das erste Scherenteil in einer Ebene angeordnet, dass durch die Fahrzeugsitzlängsrichtung und Fahrzeugsitzhöhenrichtung aufgespannt ist, so bewegt sich die Winkelsensoreinheit auf einer Kurvenbahn in dieser Ebene. Dementsprechend ist es nötig, dass sich die Hebelvorrichtung zumindest teilweise in dieser Ebene bewegt und die Freiheitsgrade zur Bewegung in dieser Ebene umschließt.
Gemäß einer besonders vorteilhaften Ausführungsform weist die Hebelvorrichtung einen ersten und einen zweiten Hebelarm auf. Vorteilhaft ist der erste Hebelarm in einem ersten Endbereich mittels einer ersten Achse schwenkbar mit dem Fahrzeugsitzunterteil verbunden und der zweite Hebelarm mittels einer zweiten Achse schwenkbar mit einem zweiten Endbereich des ersten Hebelarms verbunden und ein erster Endbereich des zweiten Hebelarms mit der Winkelsensoreinheit mittels der dritten Achse schwenkbar verbunden.
Durch diesen Aufbau der Hebelvorrichtung ist es möglich, dass sich die Hebelvorrichtung in der aufgespannten Ebene bewegen kann. Somit ist also gewährleistet, dass die Winkelsensoreinheit immer durch die Hebelvorrichtung betätigbar ist entlang der beschriebenen Kurvenbahn.
Gemäß einer bevorzugten Ausführungsform ist eine Höhenverstellung des Fahrzeugsitzes durch eine Drehwinkeländerung der Winkelsensoreinheit messbar, wobei die Drehwinkeländerung der Winkelsensoreinheit durch die Hebelvorrichtung hervorrufbar ist.

Es ist also durch die erfindungsgemäße Messeinrichtung möglich, eine Höhenverstellung, vorzugsweise gegenüber einer Nullstellung, des Fahrzeugsitzes zu messen. Somit kann also auch eine Auslenkung des Fahrzeugsitzes gegenüber einer Nullstellung gemessen werden. Vorteilhaft ist es mittels der Messeinrichtung auch möglich, Auslenkgeschwindigkeiten und/oder Auslenkbeschleunigungen zu messen.

Gemäß einer bevorzugteren Ausführungsform ist die Messeinrichtung mit einer Steuereinrichtung verbunden, wobei die durch die Messeinrichtung aufgenommenen Daten, umfassend eine Änderung der Federauslenkung und/oder eine Auslenkungsgeschwindigkeit und/oder eine Auslenkungsbeschleunigung, an die Steuereinrichtung übermittelbar sind.

Besonders vorteilhaft sind mittels der Steuereinrichtung mit Hilfe der aufgenommenen Daten eine Federkennlinie des Federsystems und/oder eine Dämpfungsleistung der Dämpfungsvorrichtung steuerbar.

Vorteilhaft ist während eines normalen Fahrbetriebs die Federhärte auf weich gestellt, so dass der Fahrer einen bestmöglichen Fahrkomfort erfahren kann. Sollte das Fahrzeug beispielsweise in ein Schlagloch auf der Straße einfahren, so würde der Fahrzeugsitz, insbesondere das Fahrzeugsitzoberteil, aufgrund der weichen Federhärte bis zu einem Endanschlag ausfedern, wodurch der Federvorgang abrupt beendet werden würde und auf den Fahrer plötzlich unerwünschte Kräfte einwirken. Um dies zu vermeiden, wird, abhängig von dem entsprechenden Messresultat oder den entsprechenden Messresultaten der Parameter vorzugsweise mittels der Steuereinrichtung die Federhärte entsprechend härter eingestellt. Entsprechend kann auch die Dämpfungsleistung der Dämpfereinrichtung aufgrund von Krafteinwirkung auf den Fahrzeugsitz mittels der Steuereinrichtung verändert werden.

Besonders bevorzugt umfasst die Winkelsensoreinheit einen Hallsensor, wobei natürlich auch andere gängige Varianten zur Messwerterfassung denkbar sind.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: einen Fahrzeugsitz mit einer Messeinrichtung gemäß einer bevorzugten Ausführungsform
- Fig. 2A: die Messeinrichtung in einer perspektivischen Rückansicht
- Fig. 2B: die Messeinrichtung in einer perspektivischen Vorderansicht
- Fig. 3: die Messeinrichtung in einem eingebauten Zustand
- Fig. 4A: den Fahrzeugsitz in einer Nullposition
- Fig. 4B: den Fahrzeugsitz in einer ersten Position
- Fig. 4C: den Fahrzeugsitz in einer zweiten Position

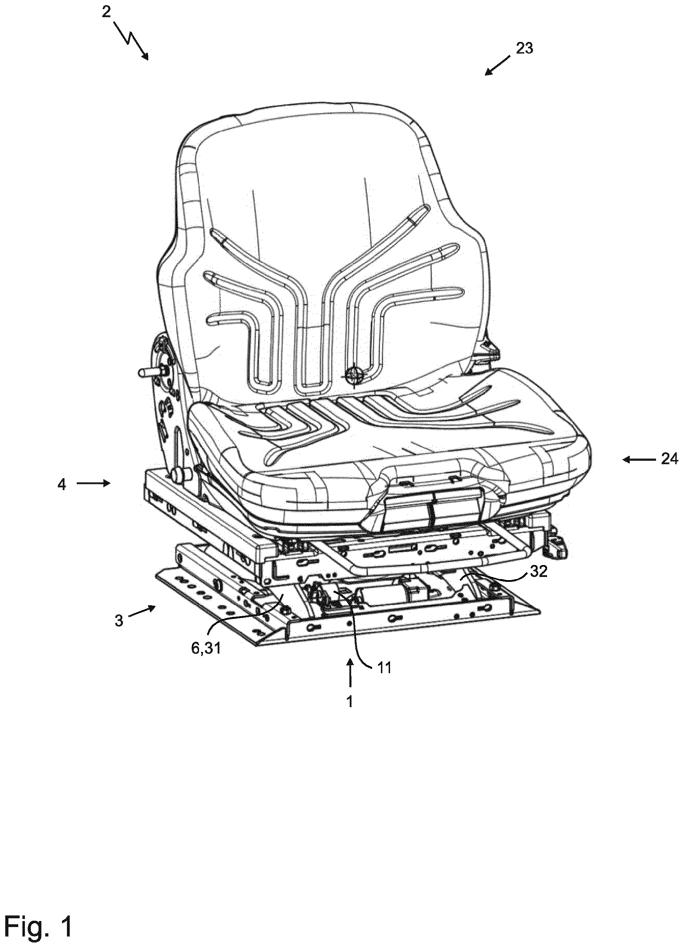

Figur 1 zeigt dabei einen Fahrzeugsitz 2 umfassend eine Rückenlehne 25 und ein Sitzteil 24, wobei das Sitzteil 24 auf dem Fahrzeugsitzoberteil 4 angeordnet ist. Das Fahrzeugsitzoberteil 4 ist über ein Scherengestell 6, das eine erste Schwinge 31 und eine zweite Schwinge 32 aufweist, mit dem Fahrzeugsitzunterteil 3 verbunden. Das Fahrzeugsitzunterteil 3 ist vorzugsweise mit einer Karosserie des Fahrzeugs (hier nicht gezeigt) fest verbunden.

Wie zu erkennen ist, ist die Messeinrichtung 1 an dem ersten Scherenteil 6 der ersten Schwinge 31 angeordnet.

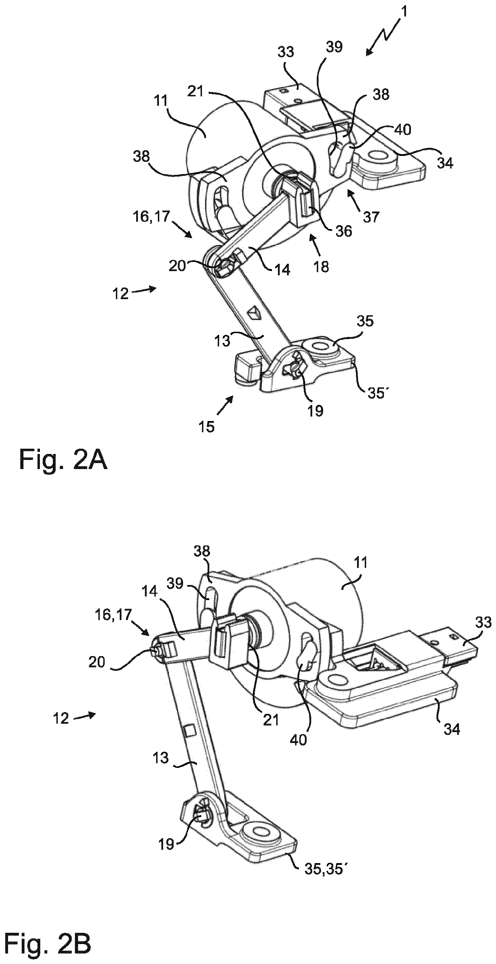

Die Figuren 2A und 2B zeigen die Messeinrichtung 1 gemäß einer besonders bevorzugten Ausführungsform im Detail.

Wie den Figuren 2A und 2B gut zu entnehmen ist, umfasst die Messeinrichtung 1 eine Winkelsensoreinheit 11, die mit einer Hebelvorrichtung 12 mittels einer dritten Achse 21 verbunden ist. Die Hebelvorrichtung 12 umfasst dabei einen ersten Hebelarm 13 und einen zweiten Hebelarm 14, wobei der erste Hebelarm 13 in seinem ersten Endbereich schwenkbar mit dem Fahrzeugsitzunterteil 3 (hier nicht gezeigt) mittels einer Verbindung 35, insbesondere einer Schraubverbindung 35 und einer Platte 35', verbindbar ist.

Im zweiten Endbereich 16 des ersten Hebelarms 13 ist mittels einer zweiten Achse 20 ein erster Endbereich eines zweiten Hebelarms 14 angelenkt, wobei in einem zweiten Endbereich 18 des zweiten Hebelarms 14 der zweite Hebelarm mittels einer dritten Achse 21 mit der Winkelsensoreinheit 11 verbindbar ist.

Der zweite Endbereich 18 des zweiten Hebelarms 14 ist dabei als ein clipsbare Steckverbindung 36 ausgebildet, wodurch eine besonders einfache Montage und Demontage möglich ist.

Wie zu erkennen ist, umfasst die Winkelsensoreinheit 11 zwei Flügel 38, die jeweils eine Aussparung 39 aufweisen. In diese Aussparung 39 kann ein Verbindungselement 40 einer Halterplatte 34 eingebracht werden, wobei die Aussparung 39 derart ausgebildet ist, dass nach Einbringen des Verbindungselements 40 in die Aussparung 39 das Verbindungselement 40 in der Aussparung 39 gedreht werden kann und so fest mit der Aussparung 39 verbunden ist. Dies erleichtert ebenso die Montage beziehungsweise die Demontage der Messeinrichtung 1.

Die Winkelsensoreinheit 11 kann ebenso mittels der Halterplatte 34 ebenso leicht mit dem ersten Scherenteil 6 verbunden werden. Darüber hinaus umfasst die Halterplatte 34 eine Datenschnittstelle 33, mittels welcher die Messdaten der Winkelsensoreinheit 11 zu der Steuereinrichtung 22 (hier nicht gezeigt) übertragen werden können. Denkbare Datenschnittstellen sind etwa eine USB-Schnittstelle, eine LAN-Verbindung oder eine Bluetooth-Verbindung. Vorteilhaft ist die Halterplatte 34 bereits an dem ersten Scherenteil 6 befestigt, so dass die Winkelsensoreinheit 11 leicht an dem ersten Scherenteil 6 montiert oder demontiert werden kann.

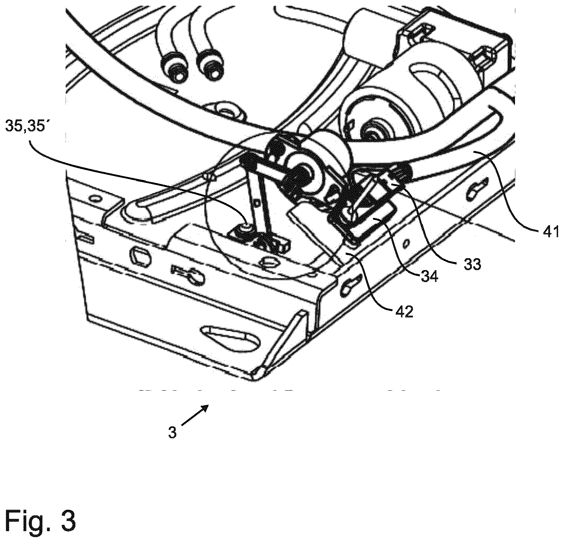

In der Figur 3 ist die Messeinrichtung 1 in einem eingebauten Zustand zu erkennen. Zur Übersichtlichkeit ist das erste Scherenteil 6 nicht zu sehen, sondern lediglich ein mit dem ersten Scherenteil 6 verbundene Verbindungsplatte 42, auf welcher die Halterplatte 34 montiert ist. Weiter ist aus der Figur 3 zu sehen, dass die Daten in diesem Ausführungsbeispiel kabelgebunden mittels eines Kabels 41 von der Messeinrichtung 1, insbesondere der Winkelsensoreinheit 11, wegführbar ist.

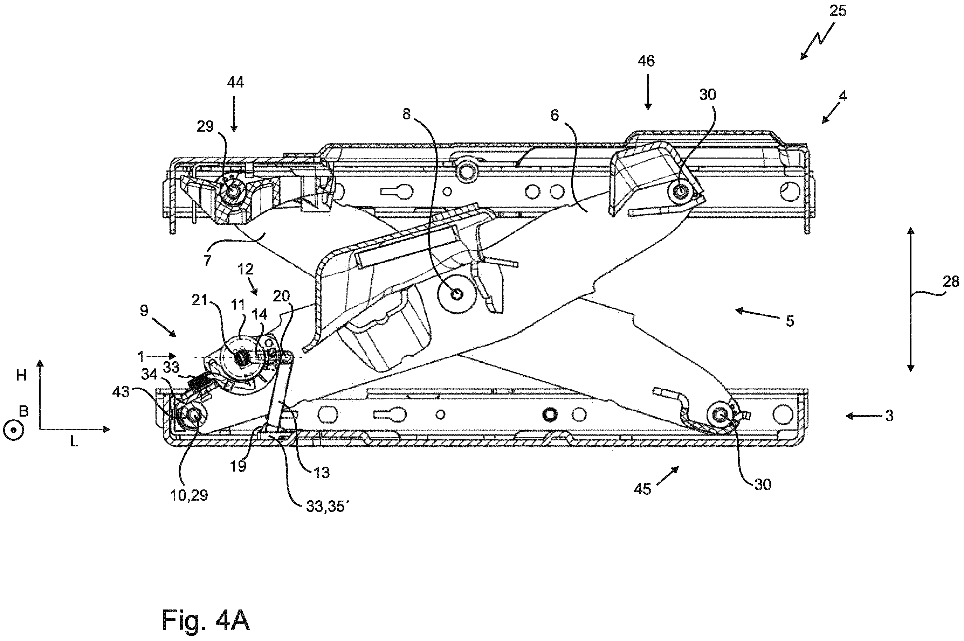

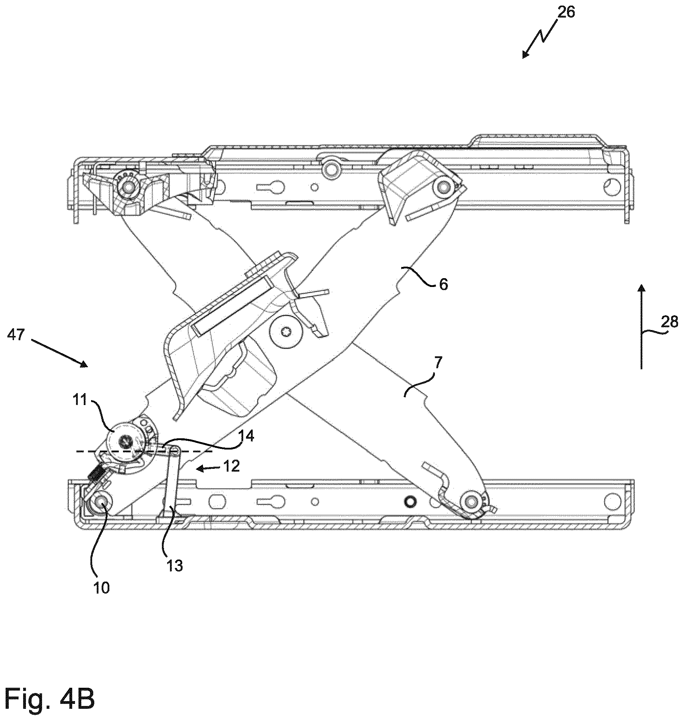

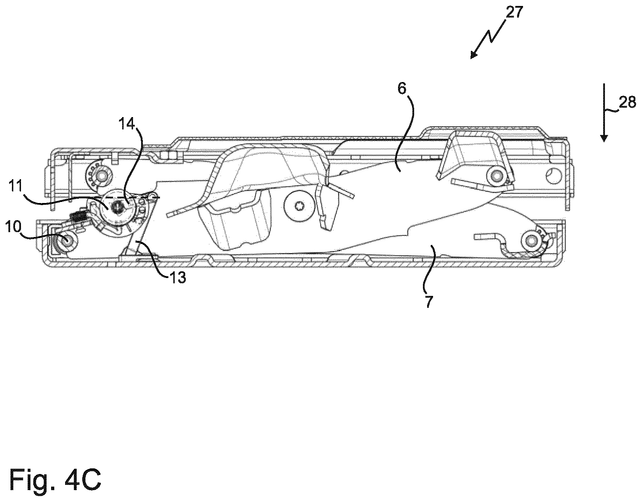

In den Figuren 4A, 4B und 4C ist die Messeinrichtung 1 ebenfalls schematisch in einem eingebauten Zustand zu erkennen. Gezeigt wird in diesen Figuren der gesamte Sitzunterbau umfassend das Fahrzeugsitzoberteil 4, das Fahrzeugsitzunterteil 3, das Scherengestell 5 sowie die Messeinrichtung 1 mit der Winkelsensoreinheit 11 und der Hebelvorrichtung 12. Die Hebelvorrichtung ist derart ausgestaltet, dass sie Bewegungen in der durch die Fahrzeugsitzlängsrichtung L und Fahrzeugsitzhöhenrichtung H aufgespannten Ebene ausführen kann. Die erste 19, zweite 20 und dritte Achse 21 sind dabei im Wesentlichen senkrecht zu dieser Ebene ausgebildet, also erstrecken sich in Fahrzeugsitzbreitenrichtung B.

Das Scherengestell 5 ist in einer Seitenansicht zu sehen und umfasst ein erstes Scherenteil 6 und ein zweites Scherenteil 7, wobei das erste 6 und das zweite Scherenteil 7 mittels einer Drehachse verbunden sind. Erfindungsgemäß ist das erste Scherenteil 6 in seinem ersten Endbereich 9 mittels einer Schwenkachse 10 schwenkbar an dem Fahrzeugsitzunterteil befestigt. Das erste Scherenteil 6 ist also vorteilhaft mittels eines Festlagers 29 mit dem Fahrzeugsitzunterteil 3 befestigt. Entsprechend der Figur 4A ist auch ein erster Endbereich 44 des zweiten Scherenteils 7 mittels eines Festlagers 29 mit dem Fahrzeugsitzoberteil 4 verbunden. Aufgrund dieser Anordnung der Festlager 29 ist es nötig, dass jeweilige zweite Endbereiche 45, 46 des ersten 6 und des zweiten Scherenteils 7 über ein Loslager mit dem Fahrzeugsitzunterteil 3 respektive Fahrzeugsitzoberteil 4 verbunden sind.

Die Schwenkachse 10 wird hierbei von einer Einhüllenden 43, beispielsweise in Form eines Rohrs, umschlossen. Vorzugsweise ist das Halterblech 34 mit der Einhüllenden 43 verbunden, vorteilhaft über eine Schweißverbindung. Das heißt, dass, wenn das Fahrzeugsitzoberteil 4 ausgelenkt wird, das erste Scherenteil 6 um die Schwenkachse 10 geschwenkt wird und die Halterplatte entsprechend mitverschwenkt wird. Diese Verschwenkung wird aus einem Vergleich der Figuren 4A-C deutlich.

An dem Halterblech 34 ist darüber hinaus die Winkelsensoreinheit 11 angeordnet, die darüber hinaus über eine Hebelvorrichtung 12 mit dem Fahrzeugsitzunterteil 3 verbunden ist. Die von der Winkelsensoreinheit 11 aufgenommenen Daten können mittels der Datenschnittstelle 33 an eine Steuereinrichtung 22 (hier nicht gezeigt) weitergeleitet werden.

In der Figur 4A befindet sich der Fahrzeugsitz 2 in einer Nullposition 25. Vorzugsweise bedeutet dies, dass keine Kraft auf den Fahrzeugsitz 2 einwirkt und der Fahrzeugsitzunterbau derart eingestellt ist, dass der Federweg in Fahrzeugsitzhöhenrichtung H nach oben gleich mit dem Federweg nach unten ist. Vorteilhaft umfasst der Fahrzeugsitz 2 dafür eine Höhennivellierungseinheit (hier nicht gezeigt), die den Fahrzeugsitz derart regelt, dass der Fahrzeugsitz, wenn keine Kräfte einwirken, in der Nullposition 25 eingestellt ist.

Wirkt nun beispielsweise eine Kraft 28 in vertikaler Richtung, also in Fahrzeugsitzhöhenrichtung H auf den Fahrzeugsitz 2 ein, so wird er, abhängig von der Richtung der Kraft 28, das Fahrzeugsitzoberteil 4 entweder nach unten oder nach oben in Fahrzeugsitzhöhenrichtung H gesehen ausgelenkt.

Eine Auslenkung des Fahrzeugsitzoberteils 4 in Fahrzeugsitzlängsrichtung H nach oben ist in der Figur 4B dargestellt, eine Auslenkung des Fahrzeugsitzoberteils 4 nach unten in der Figur 4C.

Wie deutlich aus der Figur 4B im Vergleich mit der Figur 4A zu erkennen ist, wurde die Winkelsensoreinheit 11 analog zum ersten Scherenteil 6 um die Schwenkachse 10 verschwenkt. Durch die Verschwenkung der Winkelsensoreinheit 11 wurde die Winkelsensoreinheit 11 durch die Hebelvorrichtung 12 betätigt, wie aus einem Vergleich der Hebelvorrichtung der Figur 4A mit der Figur 4B hervorgeht. Dabei erstreckt sich der zweite Hebelarm 14 der Hebelvorrichtung 12 in der Figur 4A im Wesentlichen in Fahrzeugsitzlängsrichtung L. In der Figur 4B weicht der zweite Hebelarm 14 von dieser Ausrichtung ab und erstreckt sich nun in einem Winkel zur Fahrzeugsitzlängsrichtung L.

Es ist natürlich auch denkbar, dass der zweite Hebelarm 14 bereits einen Winkel mit der Fahrzeugsitzlängsrichtung L einschließt.

Ähnlich ist die Betätigung der Winkelsensoreinheit 11 bei einer Krafteinwirkung 28 in Fahrzeugsitzhöhenrichtung H nach unten, wie es in der Figur 4C dargestellt wird. Das erste Scherenteil 6 wird hierbei jedoch in die entgegengesetzte Richtung verschwenkt. Dementsprechend wird auch der zweite Hebelarm 14 in die entgegengesetzte Richtung gegenüber der Fahrzeugsitzlängsrichtung ausgelenkt.

Abhängig von der Betätigungsrichtung der Winkelsensoreinheit 11 kann also erkannt werden, ob es sich um eine Auslenkung in Fahrzeugsitzhöhenrichtung H nach oben oder nach unten handelt. Vorzugsweise über die Steuereinrichtung kann mittels der durch die Winkelsensoreinheit aufgenommen Daten bestimmt werden, welche Auslenkung das Fahrzeugsitzoberteil 4 gegenüber dem Fahrzeugsitzunterteil 3 erfährt. Weiter vorteilhaft kann mit diesen Werten auch durch die Steuereinrichtung bestimmt werden, wie schnell diese Auslenkung geschieht und welche Beschleunigung auf das Fahrzeugsitzoberteil 4 einwirkt. Es können also die Auslenkhöhe, die Auslenkgeschwindigkeit und die Auslenkbeschleunigung bestimmt werden.

Mittels dieser Werte der Höhe, der Geschwindigkeit und der Beschleunigung können vorteilhaft mittels der Steuereinrichtung die Feder- und/oder die Dämpfungseigenschaften einer Feder und/oder eines Dämpfers (hier nicht dargestellt) verändert werden, um eine kritische Auslenkung bis zu dem jeweiligen Endanschlag verhindert werden und dem Fahrer so abrupte und ungewollte Stopps der Auslenkbewegung verhindert werden. So kann dem Fahrer weiterhin ein komfortables und sicheres Fahrgefühl vermittelt werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Messeinrichtung
- 2: Fahrzeugsitz
- 3: Fahrzeugsitzunterteil
- 4: Fahrzeugsitzoberteil
- 5: Scherengestell
- 6: erstes Scherenteil
- 7: zweites Scherenteil
- 8: Drehachse
- 9: erster Endbereich
- 10: Schwenkachse
- 11: Winkelsensoreinheit
- 12: Hebelvorrichtung
- 13: erster Hebelarm
- 14: zweiter Hebelarm
- 15: erster Endbereich des ersten Hebelarms
- 16: zweiter Endbereich des ersten Hebelarms
- 17: erster Endbereich des zweiten Hebelarms
- 18: zweiter Endbereich des zweiten Hebelarms
- 19: erste Achse
- 20: zweite Achse
- 21: dritte Achse
- 22: Steuereinrichtung
- 23: Rückenlehne
- 24: Sitzteil
- 25: Nullposition
- 26: erste Position
- 27: zweite Position
- 28: Krafteinwirkrichtung
- 29: Festlager
- 30: Loslager
- 31: erste Schwinge
- 32: zweite Schwinge
- 33: Datenschnittstelle
- 34: Halterplatte
- 35: Schraubverbindung
- 35': Platte
- 36: Steckverbindung
- 37: Steckverbindung
- 38: Flügel
- 39: Aussparung
- 40: Verbindungselement
- 41: Kabel
- 42: Verbindungsblech
- 43: Einhüllende
- 44: erster Endbereich des zweiten Scherenteils
- 45: zweiter Endbereich des zweiten Scherenteils
- 46: zweiter Endbereich des ersten Scherenteils
- 47: erster Abschnitt

## Patentansprüche

1. Messeinrichtung (1) für einen Fahrzeugsitz (2) mit einem Fahrzeugsitzunterteil (3) und einem gegenüber dem Fahrzeugsitzunterteil bewegbaren Fahrzeugsitzoberteil (4), wobei zwischen dem Fahrzeugsitzoberteil (4) und dem Fahrzeugsitzunterteil (3) ein Scherengestell (5) mit mindestens einem ersten Scherenteil (6) und mindestens einem zweiten Scherenteil (7) angeordnet ist, wobei das erste (6) und das zweite Scherenteil (7) mittels einer Drehachse (8) miteinander verbunden sind und das erste Scherenteil (6) mit einem ersten Endbereich (9) mittels einer Schwenkachse (10) an dem Fahrzeugsitzunterteil (3) schwenkbar befestigt ist,
**dadurch gekennzeichnet, dass** dass die Messeinrichtung (1) mindestens eine Winkelsensoreinheit (11) aufweist, die mit einer Hebelvorrichtung 12 der Messeinrichtung mittels einer dritten Achse 21 verbunden ist und welche in einem ersten Abschnitt (47) des ersten Scherenteils (6) an dem ersten Scherenteil (6) befestigbar ist, wobei die Winkelsensoreinheit (11) mittels der beweglichen Hebelvorrichtung (12) mit dem Fahrzeugsitzunterteil (3) beweglich verbindbar ist und wobei die Winkelsensoreinheit (11) mittels der Hebelvorrichtung (12) bei einer Höhenverstellung des Fahrzeugsitzoberteils (4) betätigbar ist.

2. Messeinrichtung (1) nach Anspruch 1,
**dadurch gekennzeichnet, dass**
der erste Abschnitt (47) des ersten Scherenteils (6) im Wesentlichen zwischen der Schwenkachse (10) und der Drehachse (8) angeordnet ist.

3. Messeinrichtung (1) nach Anspruch 1 oder 2,
**dadurch gekennzeichnet, dass**
die Hebelvorrichtung (12) einen ersten (13) und einen zweiten Hebelarm (14) aufweist, wobei der erste Hebelarm (13) in einem ersten Endbereich (15) mittels einer ersten Achse (19) schwenkbar mit dem Fahrzeugsitzunterteil (3) verbunden ist und der zweite Hebelarm (14) mittels einer zweiten Achse (20) schwenkbar mit einem zweiten Endbereich (16) des ersten Hebelarms (13) verbunden ist und ein erster Endbereich (17) des zweiten Hebelarms (14) mit der Winkelsensoreinheit (11) mittels der dritten Achse (21) schwenkbar verbunden ist.

4. Messeinrichtung (1) nach einem der Ansprüche 1 bis 3,
**dadurch gekennzeichnet, dass**
bei einer Verschwenkung des ersten Scherenteils (6) sich die Winkelsensoreinheit (11) auf einer Kurvenbahn bewegbar ist.

5. Messeinrichtung (1) nach einem der Ansprüche 1 bis 4,
**dadurch gekennzeichnet, dass**
die Winkelsensoreinheit (11) in dem ersten Endbereich (9) des ersten Scherenteils (6) nahe der Schwenkachse (10) angeordnet ist.

6. Messeinrichtung (1) nach einem der Ansprüche 1 bis 5,
**dadurch gekennzeichnet, dass**
eine Höhenverstellung des Fahrzeugsitzes (2) durch eine Drehwinkeländerung der Winkelsensoreinheit (11) messbar ist, wobei die Drehwinkeländerung der Winkelsensoreinheit (11) durch die Hebelvorrichtung (12) hervorrufbar ist.

7. Messeinrichtung (1) nach einem der Ansprüche 1 bis 6,
**dadurch gekennzeichnet, dass**
die Messeinrichtung (1) mit einer Steuereinrichtung (22) verbunden ist und durch die Messeinrichtung (1) aufgenommene Daten, umfassend eine Änderung der Federauslenkung und/oder eine Auslenkungsgeschwindigkeit und/oder eine Auslenkungsbeschleunigung, an die Steuereinrichtung (22) übermittelbar sind.

8. Messeinrichtung (1) nach Anspruch 7,
**dadurch gekennzeichnet, dass**
mittels der Steuereinrichtung (22) mit Hilfe der aufgenommenen Daten eine Federkennlinie des Federsystems und/oder eine Dämpfungsleistung der Dämpfungsvorrichtung steuerbar sind.

9. Messeinrichtung (1) nach einem der Ansprüche 1 bis 8,
**dadurch gekennzeichnet, dass**
die Winkelsensoreinheit (11) einen Hallsensor umfasst.

## Claims

1. Measurement device (1) for a vehicle seat (2) comprising a vehicle seat lower part (3) and a vehicle seat upper part (4) that is movable with respect to the vehicle seat lower part, a scissor frame (5) comprising at least one first scissor part (6) and at least one second scissor part (7) being arranged between the vehicle seat upper part (4) and the vehicle seat lower part (3), the first scissor part (6) and the second scissor part (7) being interconnected by means of an axis of rotation (8) and a first end region (9) of the first scissor part (6) being pivotably secured to the vehicle seat lower part (3) by means of a swivel axis (10),
**characterised in that**
the measurement device (1) has at least one angle sensor unit (11) which is connected to a lever apparatus (12) of the measurement device by means of a third axis (21) and which can be secured to the first scissor part (6) in a first portion (47) of the first scissor part (6), it being possible to movably connect the angle sensor unit (11) to the vehicle seat lower part (3) by means of the movable lever apparatus (12) and it being possible to operate the angle sensor unit (11) by means of the lever apparatus (12) when the height of the vehicle seat upper part (4) is adjusted.

2. Measurement device (1) according to claim 1,
**characterised in that**
the first portion (47) of the first scissor part (6) is arranged substantially between the swivel axis (10) and the axis of rotation (8).

3. Measurement device (1) according to either claim 1 or claim 2,
**characterised in that**
the lever apparatus (12) has a first lever arm (13) and a second lever arm (14), the first lever arm (13) in a first end region (15) being pivotably connected to the vehicle seat lower part (3) by means of a first axis (19) and the second lever arm (14) being pivotably connected to a second end region (16) of the first lever arm (13) by means of a second axis (20) and a first end region (17) of the second lever arm (14) being pivotably connected to the angle sensor unit (11) by means of the third axis (21).

4. Measurement device (1) according to any of claims 1 to 3,
**characterised in that**
when the first scissor part (6) is pivoted, the angle sensor unit (11) can be moved along a curved path.

5. Measurement device (1) according to any of claims 1 to 4,
**characterised in that**
the angle sensor unit (11) is arranged in the first end region (9) of the first scissor part (6) in proximity to the swivel axis (10).

6. Measurement device (1) according to any of claims 1 to 5,
**characterised in that**
a height adjustment of the vehicle seat (2) can be measured by a change to the angle of rotation of the angle sensor unit (11), it being possible for the change to the angle of rotation of the angle sensor unit (11) to be caused by the lever apparatus (12).

7. Measurement device (1) according to any of claims 1 to 6,
**characterised in that**
the measurement device (1) is connected to a control device (22) and data received by the measurement device (1), including a change to the spring deflection and/or a deflection speed and/or a deflection acceleration, can be transmitted to the control device (22).

8. Measurement device (1) according to claim 7,
**characterised in that**
a spring characteristic curve of the spring system and/or a damping performance of the damping apparatus can be controlled by means of the control device (22) using the received data.

9. Measurement device (1) according to any of claims 1 to 8,
**characterised in that**
the angle sensor unit (11) comprises a Hall effect sensor.

## Revendications

1. Dispositif de mesure (1) pour un siège de véhicule (2) comportant une partie inférieure de siège de véhicule (3) et une partie supérieure de siège de véhicule (4) déplaçable par rapport à la partie inférieure de siège de véhicule, dans lequel un châssis à ciseaux (5) ayant au moins une première partie de ciseaux (6) et au moins une seconde partie de ciseaux (7) est disposé entre la partie supérieure de siège (4) et la partie inférieure de siège (3), la première partie de ciseaux (6) et la seconde partie de ciseaux (7) étant reliées entre elles au moyen d'un axe de rotation (8) et la première partie de ciseaux (6) étant fixée de manière pivotante à la partie inférieure de siège de véhicule (3) au moyen d'un axe de pivotement (10) par une première région d'extrémité (9),
**caractérisé par le fait que**
le dispositif de mesure (1) présente au moins une unité de capteur angulaire (11), qui est reliée à un dispositif à levier (12) du dispositif de mesure au moyen d'un troisième axe (21) et laquelle est apte à être fixée à la première partie de ciseaux (6) dans une première section (47) de la première partie de ciseaux (6), l'unité de capteur angulaire (11) étant apte à être reliée de manière mobile à la partie inférieure de siège de véhicule (3) au moyen du dispositif à levier mobile (12), et l'unité de capteur angulaire (11) étant actionnable au moyen du dispositif à levier (12) lors d'un réglage en hauteur de la partie supérieure de siège de véhicule (4).

2. Dispositif de mesure (1) selon la revendication 1,
**caractérisé par le fait que**
la première section (47) de la première partie de ciseaux (6) est disposée sensiblement entre l'axe de pivotement (10) et l'axe de rotation (8).

3. Dispositif de mesure (1) selon l'une des revendications 1 ou 2,
**caractérisé par le fait que**
le dispositif à levier (12) présente un premier bras de levier (13) et un second bras de levier (14), le premier bras de levier (13) étant relié à la partie inférieure de siège de véhicule (3) de manière pivotante dans une première région d'extrémité (15) au moyen d'un premier axe (19) et le second bras de levier (14) étant relié à une seconde région d'extrémité (16) du premier bras de levier (13) de manière pivotante au moyen d'un deuxième axe (20) et une première région d'extrémité (17) du second bras de levier (14) étant reliée de manière pivotante à l'unité de capteur angulaire (11) au moyen du troisième axe (21).

4. Dispositif de mesure (1) selon l'une des revendications 1 à 3,
**caractérisé par le fait que**
l'unité de capteur angulaire (11) est déplaçable sur une trajectoire courbe lors d'un pivotement de la première partie de ciseaux (6).

5. Dispositif de mesure (1) selon l'une des revendications 1 à 4,
**caractérisé par le fait que**
l'unité de capteur angulaire (11) est disposée dans la première région d'extrémité (9) de la première partie de ciseaux (6), près de l'axe de pivotement (10).

6. Dispositif de mesure (1) selon l'une des revendications 1 à 5,
**caractérisé par le fait que**
un réglage en hauteur du siège de véhicule (2) est mesurable par un changement d'angle de rotation de l'unité de capteur angulaire (11), le changement d'angle de rotation de l'unité de capteur angulaire (11) pouvant être provoqué par le dispositif à levier (12).

7. Dispositif de mesure (1) selon l'une des revendications 1 à 6,
**caractérisé par le fait que**
le dispositif de mesure (1) est relié à un dispositif de commande (22) et des données enregistrées par le dispositif de mesure (1), comportant une modification de la déflexion de ressort et/ou une vitesse de déflexion et/ou une accélération de déflexion sont aptes à être transmises au dispositif de commande (22).

8. Dispositif de mesure (1) selon la revendication 7,
**caractérisé par le fait que**
une caractéristique de ressort du système de ressort et/ou une capacité d'amortissement du dispositif d'amortissement sont aptes à être commandées au moyen du dispositif de commande (22) à l'aide des données enregistrées.

9. Dispositif de mesure (1) selon l'une des revendications 1 à 8,
**caractérisé par le fait que**
l'unité de capteur angulaire (11) comporte un capteur à effet Hall.
